# EUROPEAN PATENT SPECIFICATION

(11) **EP 4 066 076 B1**
(45) Date of publication and mention of the grant of the patent: **27.12.2023**
(21) Application number: 20811925.5
(22) Date of filing: 02.11.2020
(51) Int. Cl.: G05D 1/02, G06T 7/00

(54) **AUTONOMOUS MACHINE NAVIGATION IN VARIOUS LIGHTING ENVIRONMENTS**
AUTONOME MASCHINENNAVIGATION IN VERSCHIEDENEN BELEUCHTUNGSUMGEBUNGEN
NAVIGATION DE MACHINE AUTONOME DANS DIVERS ENVIRONNEMENTS D'ÉCLAIRAGE

(30) Priority: 27.11.2019 US 201962941434 P
(43) Date of publication of application: 05.10.2022
(73) Proprietor: The Toro Company, Bloomington, MN 55420-1196 (US)
(72) Inventor: FRICK, Alexander Steven, Bloomington, Minnesota 55420-1196 (US); JANEY, Gregory S., Bloomington, Minnesota 55420-1196 (US)
(74) Representative: J A Kemp LLP
(86) International application number: PCT/US2020/058501
(87) International publication number: WO 2021/108083

(56) References cited:
- WO-A1-2015/017691
- US-A1- 2013 190 965
- US-A1- 2015 138 339
- US-A1- 2019 295 318

## Description

The present application claims priority to and/or the benefit of U.S. Provisional Patent Application Number 62/941,434, filed 27 November 2019.

The present disclosure generally relates to autonomous machine navigation and, in particular, autonomous machine navigation in various lighting environments.

Various machines, such as ground maintenance machine for lawns and gardens, may perform a variety of tasks. For example, powered lawn mowers may be used by both homeowners and professionals alike to maintain grass areas within a property or yard. Some lawn mowers have the capability to autonomously perform grass cutting within a predefined boundary or work region. US2019250630 discloses systems, methods and apparatuses that are provided for enhanced surface condition detection based on image scene and ambient light analysis. WO2015017691 discloses time-dependent navigation of telepresence robots.

### SUMMARY

The techniques of this disclosure generally relate to providing autonomous machine functionality for navigation. Such functionality may facilitate autonomous machine operation in a wider range of times of day than some existing systems. In particular, autonomous machines using vision-based navigation may benefit from techniques to navigate in various light conditions, particularly outdoors which may experience daytime, nighttime, transitions between the two, and the effects of artificial lighting. Also, such functionality may provide for more flexible maintenance schedules for users to properly maintain work regions using autonomous machines, which may facilitate more consistent maintenance of work regions. The invention is defined in the claims.

The invention is set forth in the independent claim 1 and in the dependent claims 2 to 15. in various lighting conditions for an autonomous machine, as defined in claim 1.

In another embodiment, the present invention provides an autonomous machine as defined in claim 15.

The summary is not intended to describe each embodiment or every implementation of the present disclosure. A more complete understanding will become apparent and appreciated by reference to the following detailed description and claims taken in view of the accompanying figures of the drawing.

### BRIEF DESCRIPTION OF THE DRAWINGS

Illustrative embodiments will be further described with reference to the figures of the drawings, wherein:
**FIG.** 1 is a conceptual diagram that illustrates one example of an autonomous machine.
**FIG.** 2 is a conceptual diagram that illustrates example systems of the autonomous machine of **FIG. 1****.**
**FIG.** 3 is a conceptual diagram that illustrates one example of a work region in which the autonomous machine of **FIG. 1** may operate.
**FIG.** 4 is a plot that illustrates one example of the size of an uncertainty area of the autonomous machine of **FIG. 1** over time.
**FIG. 5** is flow diagram that illustrates one example of a method of generating a navigation map including localization regions and buffer zones usable with the autonomous machine of **FIG. 1****.**
**FIG. 6** is a flow diagram showing one example of a method of navigating within localization regions usable with the autonomous machine of **FIG. 1****.**
**FIG. 7** is a flow diagram showing one example of a method of navigating within a containment zone using localization zones and buffer zones usable with the autonomous machine of **FIG. 1****.**
**FIG. 8** is a flow diagram showing one example of a method of navigating within a containment zone using buffer zones usable with the autonomous machine of **FIG. 1****.**

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various illustrative embodiments described herein.

### DETAILED DESCRIPTION

In the following detailed description of illustrative embodiments, reference is made to the accompanying figures of the drawing which form a part hereof. It is to be understood that other embodiments, which may not be described and/or illustrated herein, are certainly contemplated.

All headings provided herein are for the convenience of the reader and should not be used to limit the meaning of any text that follows the heading, unless so specified. Moreover, unless otherwise indicated, all numbers expressing quantities, and all terms expressing direction/orientation (e.g., vertical, horizontal, parallel, perpendicular, etc.) in the specification and claims are to be understood as being modified in all instances by the term "exactly" or "about." The term "or" is generally employed in its inclusive sense, for example, to mean "and/or" unless the context clearly dictates otherwise. The term "and/or" (if used) means one or all of the listed elements or a combination of any two or more of the listed elements. The term "i.e." is used as an abbreviation for the Latin phrase *id est* and means "that is." The term "e.g.," is used as an abbreviation for the Latin phrase *exempli gratia* and means "for example."

Embodiments of this disclosure generally relate to providing autonomous machine functionality for navigation. Such functionality may facilitate autonomous machine operation in a wider range of times of day than some existing systems. In particular, autonomous machines using vision-based navigation may benefit from techniques to navigate in various light conditions, particularly outdoors which may experience daytime, nighttime, transitions between the two, and the effects of artificial lighting. Also, such functionality may provide for more flexible maintenance schedules for users to properly maintain work regions using autonomous machines, which may facilitate more consistent maintenance of work regions.

As used herein, the term "daytime" refers to a range of times between dawn and twilight. The term "daylight" refers to a range of lighting conditions associated with daytime.

While described herein in illustrative examples as an autonomous mower, such a configuration is only illustrative, as systems and methods described herein also have application to other autonomous machines including, for example, commercial mowing products, other ground working machines or vehicles (e.g., debris blowers/vacuums, aerators, dethatchers, material spreaders, snow throwers, weeding machines for weed remediation), indoor working vehicles such as vacuums and floor scrubbers/cleaners (e.g., that may encounter obstacles), construction and utility vehicles (e.g., trenchers), observation vehicles, and load transportation (e.g., including people and things, such as people movers and hauling equipment). Furthermore, the autonomous machines described herein may employ various one or more types of navigation, such as random, modified random, or specific path planning, to carry out their intended functionality.

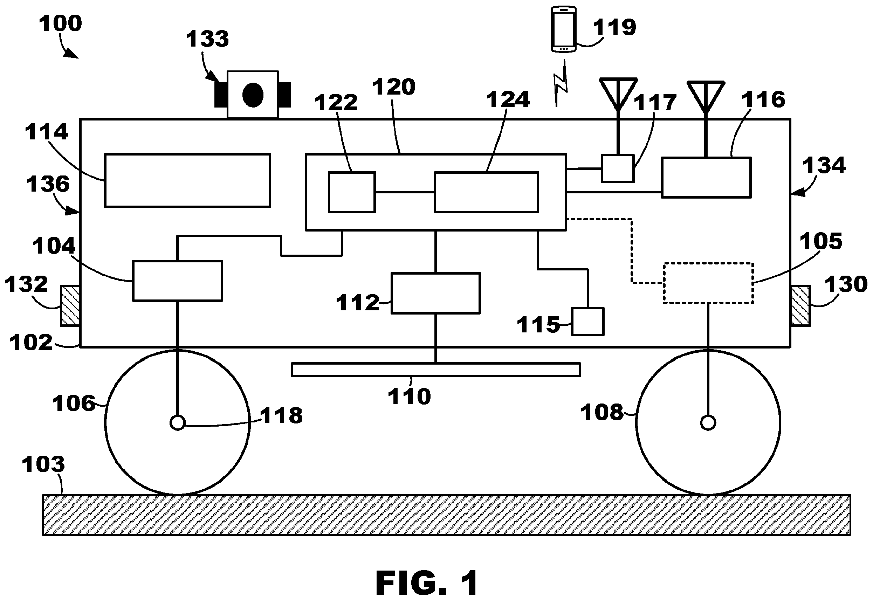

It is noted that the terms "have," "include," "comprises," and variations thereof, do not have a limiting meaning, and are used in their open-ended sense to generally mean "including, but not limited to," where the terms appear in the accompanying description and claims. Further, "a," "an," "the," "at least one," and "one or more" are used interchangeably herein. Moreover, relative terms such as "left," "right," "front," "fore," "forward," "rear," "aft," "rearward," "top," "bottom," "side," "upper," "lower," "above," "below," "horizontal," "vertical," and the like may be used herein and, if so, are from the perspective shown in the particular figure, or while the machine **100** is in an operating configuration (e.g., while the machine **100** is positioned such that wheels **106** and **108** rest upon a generally horizontal ground surface **103** as shown in **FIG. 1**). These terms are used only to simplify the description, however, and not to limit the interpretation of any embodiment described.

The techniques of this disclosure may be used with any suitable autonomous machine. **FIG. 1** illustrates one example of an autonomous grounds maintenance machine (e.g., an autonomously operating vehicle, such as an autonomous lawn mower **100**) of a lawn mowing system (for simplicity of description, the mower **100** is illustrated schematically). The mower **100** may include functionality to navigate autonomously in various lighting conditions, such as in daylight or at night.

As shown in this view, the mower **100** may include a housing **102** (e.g., frame or chassis with a shroud) that carries and/or encloses various components of the mower as described below. The mower **100** may further include ground support members, such as wheels, rollers, or tracks. In the illustrated embodiment, ground support members shown includes one or more rear wheels **106** and one or more front wheels **108,** that support the housing **102** upon a ground (grass) surface **103.** As illustrated, the front wheels **108** are used to support a front-end portion **134** of the mower housing **102** and the rear wheels **106** are used to support the rear end portion **136** of the mower housing.

One or both rear wheels **106** may be driven by a propulsion system (e.g., including one or more electric wheel motors **104**) to propel the mower **100** over the ground surface **103.** In some embodiments, the front wheels **108** may freely caster relative to the housing **102** (e.g., about vertical axes). In such a configuration, mower direction may be controlled via differential rotation of the two rear wheels **106** in a manner similar to some existing zero-turn-radius (ZTR) riding mowers. That is to say, the propulsion system may include a separate wheel motor **104** for each of a left and right rear wheel **106** so that speed and direction of each rear wheel may be independently controlled. In addition, or alternatively, the front wheels **108** could be actively steerable by the propulsion system (e.g., including one or more steer motors **105**) to assist with control of mower **100** direction, and/or could be driven by the propulsion system (i.e., to provide a front-wheel or all-wheel drive mower).

An implement (e.g., a grass cutting element, such as a blade **110**) may be coupled to a cutting motor **112** (e.g., implement motor) carried by the housing **102.** When the motors **112** and **104** are energized, the mower **100** may be propelled over the ground surface **103** such that vegetation (e.g., grass) over which the mower passes is cut by the blade **110.** While illustrated herein using only a single blade **110** and/or motor **112,** mowers incorporating multiple blades, powered by single or multiple motors, are contemplated within the scope of this disclosure. Moreover, while described herein in the context of one or more conventional "blades," other cutting elements including, for example, disks, nylon string or line elements, knives, cutting reels, etc., are certainly possible without departing from the scope of this disclosure. Still further, embodiments combining various cutting elements, e.g., a rotary blade with an edge-mounted string trimmer, are also contemplated.

The mower **100** may further include a power source, which in one embodiment, is a battery **114** having a lithium-based chemistry (e.g., lithium-ion). Other embodiments may utilize batteries of other chemistries, or other power source technologies (e.g., solar power, fuel cell, internal combustion engines) altogether, without departing from the scope of this disclosure. It is further noted that, while shown as using independent blade and wheel motors, such a configuration is illustrative only as embodiments wherein blade and wheel power is provided by a single motor are also contemplated.

The mower **100** may further include one or more sensors to provide location data. For instance, some embodiments may include a global positioning system (GPS) receiver **116** (or other position sensor that may provide similar data) that is adapted to estimate a position of the mower **100** within a work region and provide such information to a controller **120** (described below). In other embodiments, one or more of the wheels **106, 108** may include encoders **118** that provide wheel rotation/speed information that may be used to estimate mower position (e.g., based upon an initial start position) within a given work region. The mower **100** may also include a sensor **115** adapted to detect a boundary wire, which could be used in addition to other navigational techniques described herein.

The mower **100** may include one or more front obstacle detection sensors **130** and one or more rear obstacle detection sensors **132,** as well as other sensors, such as side obstacle detection sensors (not shown). The obstacle detection sensors **130, 132** may be used to detect an obstacle in the path of the mower **100** when traveling in a forward or reverse direction, respectively. The mower **100** may be capable of mowing while moving in either direction. As illustrated, the sensors **130, 132** may be located at the front-end portion **134** or rear end portion **136** of the mower **100,** respectively.

The sensors **130, 132** may use contact sensing, non-contact sensing, or both types of sensing. For example, both contact and non-contact sensing may be enabled concurrently or only one type of sensing may be used depending on the status of the mower **100** (e.g., within a zone or traveling between zones). One example of contact sensing includes using a contact bumper protruding from the housing **102,** or the housing itself, that can detect when the mower **100** has contacted the obstacle. Non-contact sensors may use acoustic or light waves to detect the obstacle, sometimes at a distance from the mower **100** before contact with the obstacle (e.g., using infrared, radio detection and ranging (radar), light detection and ranging (lidar), etc.).

The mower **100** may include one or more vision-based sensors to provide localization data, such as position, orientation, or velocity. The vision-based sensors may include one or more cameras **133** that capture or record images for use with a vision system. The cameras **133** may be described as part of the vision system of the mower 100. Types of images include, for example, training images and/or operational images.

The one or more cameras **133** may be used to determine an environmental lighting parameter based on an exposure time. The one or more cameras **133** may vary exposure time until a sufficient, or good, image is captured. The environmental lighting parameter may be determined based on the exposure time corresponding to the good image. The environmental lighting parameter may be based on an average of exposure times taken by different cameras **133,** taken at different times using the one or more cameras, or both.

Additionally, or alternatively, the one or more cameras **133** may include a light meter or may be supplemented by a separate light meter. Cameras and light meters may be used to determine an environmental lighting parameter indicative of a light level of the environment, which may be measured in Lux, around the mower **100.** The environmental lighting parameter may be based on an average from one or more cameras or light meters.

In some embodiments, the environmental lighting parameter may be a predetermined or nominal value. For example, the environmental lighting parameter may be a factory setting that represents a nominal or worst-case lighting condition.

The environmental lighting parameter may also be determined based on a time of day. The relationship between environmental lighting parameter and the time of day may be based on a factory setting or calibrated based on exposure time or other lighting measurements.

The one or more cameras **133** may be capable of detecting visible light, non-visible light (e.g., infrared light), or both. Any suitable total field of view may be used. In some embodiments, the one or more cameras **133** may establish a total field of view relative to a horizontal plane greater than or equal to 30, 45, 60, 90, 120, 180, 270, or 360 degrees, around the autonomous machine (e.g., mower **100**). In some embodiments, one or more cameras **133** may establish a total field of view, for example, relative to a horizontal plane less than or equal to 360, 270, 180, 120, 90, 60, 45, or 30 degrees around the autonomous machine. The field of view may be defined in a horizontal direction, a vertical direction, or both directions. For example, a total horizontal field of view may be less than or equal to 360 degrees, and a total vertical field of view may be 45 degrees. In some embodiments, the total field of view may be described in a three-dimensional (3D) geometry, such as steradians. For example, the total field of view may be less than or equal to 4π steradians. The field of view may capture image data above and below the height of the one or more cameras **133.**

In some embodiments, the mower **100** includes four cameras **133.** One camera **133** may be positioned in each of one or more of directions including a forward direction, a reverse direction, a first side direction, and a second side direction (e.g., Cardinal directions relative to the mower **100**). One or more camera directions may be positioned orthogonal to one or more other cameras **133** or positioned opposite to at least one other camera **133.** The cameras **133** may also be offset from any of these directions (e.g., at a 45 degree or another non-right angle).

The mower **100** may be guided along a path, for example, in a manual manner using a handle. In particular, manual direction of the mower **100** may be used during a training mode to learn a work region or a boundary associated with the work region.

The camera **133** positioned in a forward direction may have a position and orientation that represents a pose of the autonomous machine. In some embodiments, the position and orientation of the cameras may be defined relative to a geometric center of the mower **100** or relative to one of the edges of the mower **100.**

As used herein, the term "pose" refers to a position and an orientation. The pose may be a six-degrees of freedom pose (6DOF pose), which may include all position and orientation parameters for a three-dimensional space. Pose data may include a three-dimensional position and a three-dimensional orientation. For example, the position may include at least one position parameter selected from: an x-axis, a y-axis, and a z-axis coordinate (e.g., using a Cartesian coordinate system). Any suitable angular orientation representations may be used. Non-limiting examples of angular orientation representations include a yaw, pitch, and roll representation, a Rodrigues' representation, a quaternions representation, and a direction cosine matrix (DCM) representation may also be used alone or in combination. In one example, the orientation may include at least one orientation parameter selected from a yaw (e.g., vertical z-axis orientation), a pitch (e.g., a transverse y-axis orientation), and a roll (e.g., a longitudinal x-axis orientation).

Sensors of the mower **100** may also be described as either vision-based sensors and non-vision-based sensors. Vision-based sensors may include cameras **133** that are capable of recording images. The images may be processed and used to build a three-dimensional (3D) point cloud or used for optical odometry (e.g., optical encoding). Non-vision-based sensors may include any sensors that are not cameras **133.** For example, a wheel encoder that uses optical (e.g., photodiode), magnetic, or capacitive sensing to detect wheel revolutions may be described as a non-vision-based sensor that does not utilize a camera. Wheel encoding data from a wheel encoder may be also described as odometry data.

Optical encoding may be used by taking a series or sequence of images and comparing features in the images to determine or estimate a distance traveled between the images. Optical encoding may be less susceptible to wheel slippage than a wheel encoder for determining distance or speed.

In addition to the sensors described above, other sensors now known or later developed may also be incorporated into the mower **100.**

The mower **100** may also include a controller **120** adapted to monitor and control various mower functions. The controller **120** may include a processor **122** that receives various inputs and executes one or more computer programs or applications stored in memory **124.** The memory **124** may include computer-readable instructions or applications that, when executed, e.g., by the processor **122,** cause the controller **120** to perform various calculations and/or issue commands. That is to say, the processor **122** and memory **124** may together define a computing apparatus operable to process input data and generate the desired output to one or more components/devices. For example, the processor **122** may receive various input data including positional data from the GPS receiver **116** and/or encoders **118** and generate speed and steering angle commands to the drive wheel motor(s) **104** to cause the drive wheels **106** to rotate (at the same or different speeds and in the same or different directions). In other words, the controller **120** may control the steering angle and speed of the mower **100,** as well as the speed and operation of the cutting blade.

Reference herein may be made to various parameters, data, or data structures, which may be handled in a controller **120,** for example, by being processed by a processor **122** or stored in or retrieved from a memory **124.**

The controller **120** may use the processor **122** and memory **124** in various different systems. In particular, one or more processors **122** and memory **124** may be included in each different system. In some embodiments, the controller **120** may at least partially define a vision system, which may include a processor **122** and memory **124.** The controller **120** may also at least partially define a navigation system, which may include a processor **122** and memory **124** separate from the processor **122** and memory **124** of the vision system.

Each system may also be described as having its own controller **120.** For example, the vision system may be described as including one controller **120** and the navigation system may be described as having another controller **120.** As such, the mower **100** may be described as having multiple controllers **120.** In general, as used herein, the term "controller" may be used to describe components of a "system" that provide commands to control various other components of the system.

In view of the above, it will be readily apparent that the functionality of the controller **120** may be implemented in any manner known to one skilled in the art. For instance, the memory **124** may include any volatile, non-volatile, magnetic, optical, and/or electrical media, such as a random-access memory (RAM), read-only memory (ROM), non-volatile RAM (NVRAM), electrically-erasable programmable ROM (EEPROM), flash memory, and/or any other digital media. While shown as both being incorporated into the controller **120,** the memory **124,** and the processor **122** could be contained in separate modules.

The processor **122** may include any one or more of a microprocessor, a controller, a digital signal processor (DSP), an application specific integrated circuit (ASIC), a field-programmable gate array (FPGA), and/or equivalent discrete or integrated logic circuitry. In some embodiments, the processor **122** may include multiple components, such as any combination of one or more microprocessors, one or more controllers, one or more DSPs, one or more ASICs, and/or one or more FPGAs, as well as other discrete or integrated logic circuitry. The functions attributed to the controller **120** and/or processor **122** herein may be embodied as software, firmware, hardware, or any combination of these. Certain functionality of the controller **120** may also be performed with Internet-connected cloud computing or other distributed computing systems operably connected to the processor **122.**

In **FIG. 1**, schematic connections are generally shown between the controller **120** and the battery **114,** wheel motor(s) **104,** blade motor **112,** optional boundary wire sensor **115,** wireless radio **117,** and GPS receiver **116.** This interconnection is illustrative only as the various subsystems of the mower **100** could be connected in most any manner, e.g., directly to one another, wirelessly, via a bus architecture (e.g., controller area network (CAN) bus), or any other connection configuration that permits data and/or power to pass between the various components of the mower. Although connections with some of the sensors **130, 132, 133** are not shown, these sensors and other components of the mower **100** may be connected in a similar manner. The wireless radio **117** may communicate over a cellular or other wide area network (e.g., even over the internet), a local area network (e.g., IEEE 802.11 "Wi-Fi" radio), or a peer-to-peer (P2P) (e.g., BLUETOOTH^{™}) network with a separate user interface device **119** (e.g., mobile device, such as a smartphone, tablet, desktop, or wearable computer). In turn, the user interface device **119** may communicate with other devices over similar networks and, for example, may be used to connect the mower **100** to the internet.

The user interface device **119** may or may not be couplable to the mower **100.** In some embodiments, the user interface device **119** may be used to provide user input or commands from the user to the mower **100.** In some embodiments, the user interface device **119** may be used to provide an indication to the user, such as a visual presentation on a graphical user interface (e.g., screen or touchscreen).

In some embodiments, various functionality of the controller or controllers **120** described herein may be offloaded from the mower **100.** For example, recorded images may be transmitted to a remote server (e.g., in the cloud) using the wireless radio **117** and processed or stored. The images stored, or other data derived from processing, may be received using the wireless radio **117** and be stored on, or further processed by, the mower **100.**

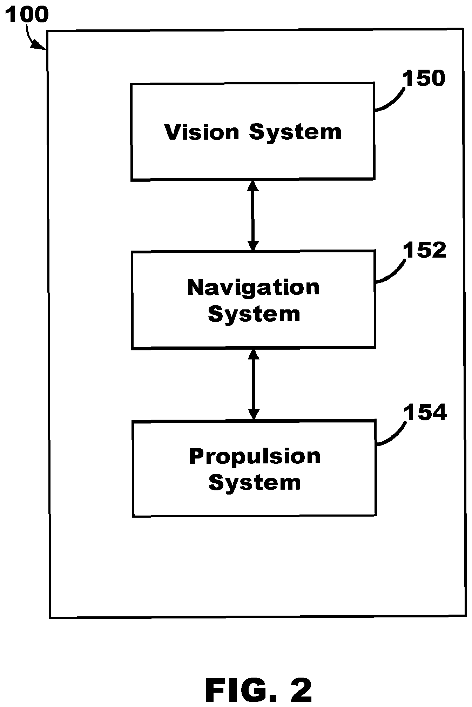

In general, the controller **120** and various components or systems of the mower **100** may be used to carry out various functionality described herein. Some examples of systems of the mower **100** are shown in **FIG. 2****.**

**FIG. 2** shows an overview of various systems of the mower **100** of **FIG. 1** including a vision system **150,** a navigation system **152,** and a propulsion system **154.** Although all systems **150, 152, 154** are shown as entirely part of the mower **100,** in some embodiments, some or all of each system may also be located off the mower **100.** The vision system **150** may be operably coupled to the navigation system **152,** and the navigation system **152** may be operably coupled to the propulsion system **154.** Any suitable navigation technique may be used with the mower **100.** In some embodiments, navigation techniques may be used as described in U.S. Patent Application No. 16/534,515, filed August 7, 2019, and U.S. Provisional Application No. 62/831,347, filed April 9, 2019.

Sensors of the navigation system **152** may be used to record non-vision-based data during a training mode while the vision system **150** records images, such as training images. Although the mower **100** may be directed manually by a user, in some embodiments, the navigation system **152** may autonomously direct the machine during the training mode. The vision system **150** may include one or more cameras to record, or capture, images. In some embodiments, a controller of the vision system **150** may provide position and/or orientation data to the navigation system **152** based on the recorded images, which may be used to facilitate navigation of the mower **100.** For example, the vision system **150** may provide an estimated position and/or orientation of the mower **100** to the navigation system **152** based on vision-based sensor data.

In some embodiments, the navigation system **152** may primarily use a position and/or orientation based on non-vision-based sensor data for navigation. For example, non-vision-based sensor data may be based on an output from an inertial measurement unit or wheel encoder. During a training mode or an offline mode, for example, a controller of the navigation system **152** may determine a boundary using non-vision-based sensor data, and the vision-based data, for subsequent navigation of the autonomous machine in the work region. During an online mode, for example, a controller of the navigation system **152** may determine a pose based on vision-based pose data, non-vision-based pose data, or both. In some embodiments, a pose may be determined based on non-vision-based sensor data and update the pose based on the vision-based pose data, which may be described as vision-based localization. The navigation system **152** may compare data from various sensors to correct for errors and update the position, which may be described as sensor fusion. For example, the vision-based position and/or orientation may be compared to the non-vision-based position and/or orientation. In some embodiments, sensor data other than vision-based sensor data may be used to correct for errors and update the position, such as GPS data.

The navigation system **152** may extract feature data from images captured by the vision system **150.** Feature data may be extracted from training images to provide training feature data. Using training feature data, the navigation system **152** may generate a three-dimensional point cloud (3DPC) and associated data, which may include a plurality of 6DOF poses of the autonomous machine, to represent the work region. The 3DPC and poses may be registered in a navigation map. Optionally, non-vision-based data, such as GPS data, IMU data, and odometry data may also be registered to a real-world coordinate system, such as a coordinate system of an Earth-referenced map. Feature data may be extracted from operational images and compared with the training feature data, which may be described as feature matching. During operation, the comparison of operational feature data to training feature data may be used to identify a position and/or orientation of the autonomous machine to facilitate navigation.

As used herein, the term "feature" refers to two-dimensional (2D) data that results from identifying one or more points, in particular key points or points of interest, in a two-dimensional image. Features may be identified in and extracted from an image using a feature detector algorithm. Any suitable feature detector algorithm available to one having ordinary skill in the art may be used depending on the particular autonomous machine and application. In some embodiments, each unique feature refers to only one point, or point of interest, in an image or 3DPC. The feature may be stored as feature data containing coordinates defined relative to the image frame. In some embodiments, feature data may also include a descriptor applied to, associated with, or corresponding to the feature. The term "feature data" refers to a data structure that represents features and may include a two-dimensional position and a multi-dimensional descriptor (e.g., two-dimensional or three-dimensional).

Key points used to identify features may be extracted from various objects in an image. In some embodiments, the objects may be permanent, temporary, or both. In some embodiments, the objects may be natural, artificial, or both. One example of a permanent feature is a corner of a house. One example of a natural feature is an edge of a tree trunk. Some examples of temporary and artificial features include a stake in the ground and a target on a tree. The artificial feature may be temporarily placed and used to increase feature density within a work region (e.g., to improve a low-quality portion of a 3DPC). The artificial feature may be powered and, for example, may include a light emitter for visible or non-visible light detectable by a camera. The artificial feature may be unpowered and, for example, may include a visible or non-visible pattern detectable by a camera. Some artificial features may be permanently placed. As used herein, the term "non-visible" refers to emitting or reflecting wavelengths of light that are not visible to the human eye, but which may emit or reflect wavelengths visible by a camera, such as an infrared camera on the autonomous machine.

As used herein, the term "descriptor" refers to two-dimensional data that results from a descriptor algorithm. The descriptor describes the feature in the context of the image. In some embodiments, a descriptor may describe pixel values, image gradients, scale-space information, or other data in the image near or around the feature. For example, the descriptor may include an orientation vector for the feature or may include a patch of image. Any suitable descriptor algorithm for providing context for a feature in an image that is available to one having ordinary skill in the art may be used depending on the particular autonomous machine or application. A descriptor may be stored as part of feature data.

Any suitable technique may be used to extract features from images, which may include or utilize algorithms, such as a Scale Invariant Feature Transform (SIFT), Speeded Up Robust Features (SURF), Oriented FAST and Rotated Brief (ORB), KAZE, Accelerated-KAZE (AKAZE), linear feature tracking, camera merging, loop closure, incremental structure from motion, or other suitable algorithms. Such algorithms may, for example, provide one or more features and related descriptors.

Any suitable technique may be used for feature matching, which may include or utilize algorithms, such as Brute-Force, Approximate Nearest Neighbor (ANN), and Fast Library for Approximate Nearest Neighbor (FLANN). The Brute-Force algorithm may match features by selecting one feature and checking all other features for a match.

As used herein, the term "three-dimensional point cloud," "3D point cloud," or "3DPC" is a data structure that represents or contains three-dimensional geometric points which correspond to features extracted from images. The 3DPC may be associated with various properties, such as poses. In some embodiments, the geometric points and poses may or may not be defined in a coordinate system based on an arbitrary frame of reference. In some embodiments, the 3DPC may or may not be associated with a scale, orientation, or both that is tied to the real-world, for example, until a map registration process has been performed. The 3DPC may be generated based on feature matching data. A graph, or visual map, may be generated based on the 3DPC to provide a human-viewable representation of the 3DPC.

Any suitable technique may be used to generate the 3DPC, which may include or utilize algorithms, such as Structure from Motion (SfM) or Simultaneous Localization and Mapping (SLAM), either of which may be used with various embodiments of the present disclosure, for example, depending on the particular autonomous machine and application.

A controller of the navigation system **152** may command the propulsion system **154** based on an updated pose. For example, a corrected or updated position or orientation may be used by the navigation system **152** to provide propulsion commands to a propulsion system **154.** The propulsion system **154** (e.g., propulsion hardware) may be defined to include, for example, motors **112, 104** and wheels **106, 108** (**FIG. 1**) or any related drivers (e.g., motor controllers or microchips).

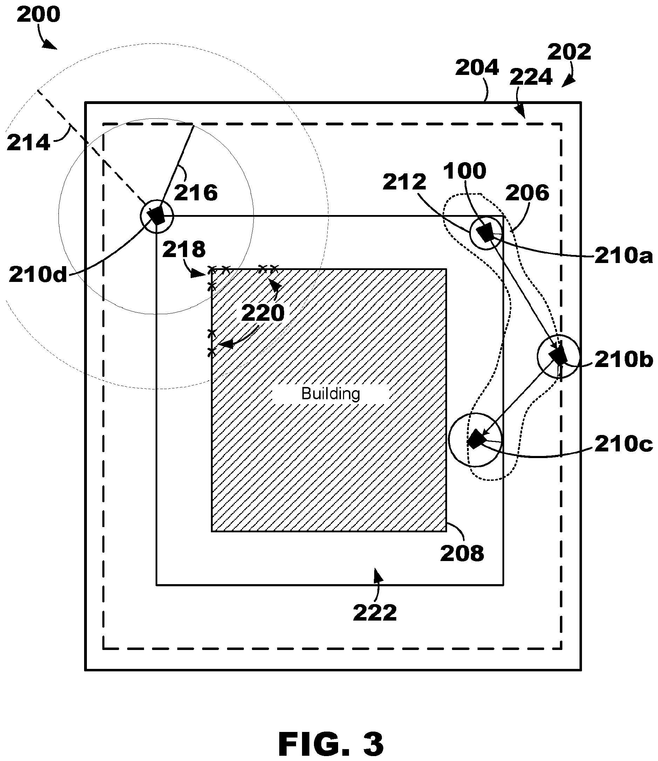

**FIG. 3** shows an overhead conceptual diagram of some features of a navigation map **200** for a work region **202.** The work region **202** may be described the area in which an autonomous machine, such as the mower **100,** operates to perform certain tasks. For example, the work region **202** for the mower **100** may include a yard or other grassy area. The navigation map **200** may define certain navigational constructs relative to the work region **202,** such as zones and boundaries. The navigation map **200** may be used, for example, by the navigation system **152 (****FIG. 2****)** to facilitate navigation and by the user interface device **119** to show the user some or all of the navigation map and to receive user input related to the navigation map.

The navigation map **200** may define one or more zones and related boundaries for different purposes. In some embodiments, the navigation map **200** may define one or more containment zones, such as containment zones **204, 206,** within the work region **202.** Containment zones may be described as areas in which the mower **100** operates to perform a task. For example, the mower **100** may perform the task of mowing all grass in one containment zone. During operation, the mower **100** may be directed to travel within the boundary for a containment zone for a period of time, for example, without crossing or intersecting with the containment zone boundary.

In some embodiments, a containment zone may be described as a static containment zone, which does not change as the mower **100** operates, such as containment zone **204.** In some embodiments, a containment zone may be described as a dynamic containment zone, which changes as the mower **100** operates, such as containment zone **206.** One example of a dynamic containment zone is a travelling containment zone as described in U.S. Provisional Application No. 62/588,680 (Ingvalson et al.), filed November 20, 2017, and U.S. Provisional Application No. 62/599,938 (Ingvalson et al.), filed December 18, 2017. The travelling containment zone may be used to cover a trained containment zone **206.**

In some embodiments, the navigation map **200** may define one or more exclusion zones and related boundaries, such as exclusion zone **208,** within the work region **202.** Exclusion zones may represent an area of the work region **202** for the mower **100** to avoid or travel around. For example, the exclusion zone **208** may contain an obstacle (such as a landscaped garden) or problem area (such as a steep slope). In the illustrated embodiment, the exclusion zone 208 contains a building, such as a house. Exclusion zones may be defined within a containment zone. During operation, the mower 100 may be directed to travel within the containment zone for a period of time, for example, without crossing or intersecting with the exclusion zone boundary.

In some embodiments (not shown), the navigation map 200 may define one or more transit zones, which may also be described as a transit path. In general, a transit zone is a zone or path connecting two other zones, such as connecting two different containment zones. A maintenance task may or may not be performed in the transit zone. For example, the mower **100** may not mow grass in a transit zone. In an example involving a yard divided by a driveway, a transit zone may include the entire driveway, or at least a path across the driveway, between two grassy parts of a lawn for the mower **100** to traverse.

In some embodiments, the position and/or orientation of the mower **100** may be estimated or determined based on non-vision-based sensor data. An uncertainty may be associated with the determined position and/or orientation. The uncertainty in the position and/or orientation may be represented by an uncertainty area **212** proximate to the mower **100.** The uncertainty area **212** may correspond to an estimation or determination of where the mower **100** could be in the navigation map **200,** for example, based on a probability. Although the uncertainty is shown and described as an area, any suitable parameter may be used indicate of the uncertainty area **212,** such as one or more of an uncertainty radius or distance.

In the illustrated embodiment, the uncertainty area **212** is shown as a circle. A circle may represent a uniform radius around the mower **100,** which may be used in simple cases as an estimate or when uncertainty is uniformly distributed around the mower. In some embodiments (not shown), the uncertainty area **212** may have a different shape and the mower **100** may not be located at the centroid of the uncertainty area. For example, the uncertainty area **212** may have an elliptical or ovate shape. The uncertainty area **212** may be determined using various sensors of the mower **100,** which may be used to provide error corrections. The uncertainty area **212** may also be determined relative to the navigation map **200.**

In some embodiments, the uncertainty area **212** may be determined based on the sensors of the mower **100** giving error corrections along with how the mower is moving. For example, if the mower **100** were measuring distance in a forward direction, the error in front of the mower may be small because of constant measurement. A side error may grow as the mower **100** moves, until the mower turns and measures a distance to the side to eliminate that error. The error may be described as position error relative to where the mower **100** is in the navigation map **200.** In the case of turning to eliminate the error via movement, the error ellipse may not turn with the mower **100.** The uncertainty area **212** may be defined based on the coordinates of the navigation map **200.** Turning the mower **100** may allow error to drop along different axes of the navigation map **200.**

Over time, as the mower **100** operates and traverses the work region **202,** the accuracy of the determined position and/or orientation may become less certain, or more uncertain, which may also be described as drift. As a result, the calculated uncertainty area **212** may grow. In the illustrated embodiment, the mower **100** is shown traversing from a first position **210a** to a second position **210b** to a third position **210c.** The uncertainty area **212** covers a first area at the first position **210a,** a second area greater than the first area at the second position **210b,** and a third area greater than the second area at the third position **210c.**

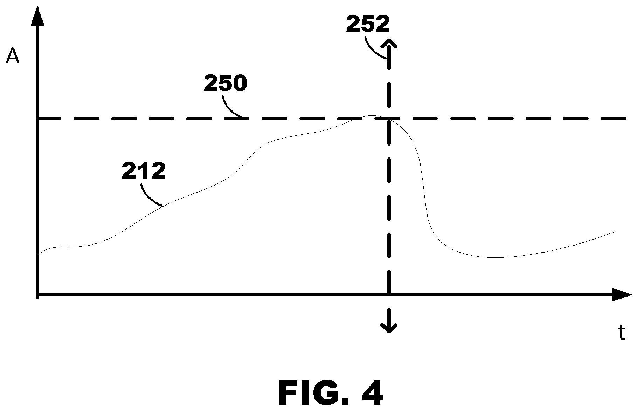

The pose may be updated using vision-based pose data to decrease the uncertainty area **212.** The pose may be updated, for example, based on the uncertainty area **212** and an uncertainty area threshold. In particular, the uncertainty area **212** may be compared to the uncertainty area threshold. When the uncertainty area **212** exceeds the uncertainty area threshold, the mower **100** may initiate a vision-based localization process. As can be seen in **FIG. 4****,** showing the uncertainty area **212** (A) along the y-axis growing over time (t) along the x-axis until meeting the uncertainty area threshold **250** at time **252.** After time **252,** the uncertainty area **212** may decrease significantly. The vision-based localization process may be described as using vision-based pose data, independently or in combination with other non-vision-based pose data, to determine and update the pose of the mower **100.** The mower **100** may repeat this process whenever the uncertainty area **212** exceeds the uncertainty area threshold during operation.

In some embodiments, the uncertainty area **212** may not be completely reduced with every localization attempt. Some vision-based localizations may only reduce the uncertainty area **212** partially. In response, the mower **100** may initiate a next vision-based localization sooner or may initiate vision-based localizations more frequently.

The ability to use vision-based localization may depend on the visibility of the mower 100. For example, in the daylight, the mower **100** may be able to localize at a particular location but may not be able to localize at the same location in the night, when there is less environmental light available. The visibility of the mower **100** may be represented by a feature detection range. The feature detection range may be described as a maximum or target distance that the mower **100** is able to detect features, which may change based on environmental lighting. For example, in the daylight, the mower **100** may be described as having a first feature detection range **214,** and in the night or in low lighting, the mower **100** may be described as having a second feature detection range **216,** which is less than the first feature detection range. In the illustrated embodiment, features **218** are within the first feature detection range **214** and the second feature detection range **216** when the mower **100** is at a fourth position **210d.** The features **220** are within the first feature detection range **214** but outside of the second feature detection range **216** when the mower **100** is at the fourth position **210d.** Each feature **218, 210** is schematically illustrated with an "x".

In general, a feature detection range, such as feature detection ranges **214, 216,** may be determined based on an environmental lighting parameter indicative of a light level of the surrounding environment. In one example, one or more camera exposure times may be used to indicate the light level. In another example, one or more luminosity readings from one or more light meters may be used to indicate the light level. In some embodiments, the environmental lighting parameter may be based on a nighttime environmental lighting parameter. In one example, the nighttime environmental lighting parameter may correspond to a predetermined environmental lighting at night, which may be a nominal or default value that corresponds to a worst-case environmental lighting. In another example, the nighttime environmental lighting parameter may correspond to a measurement in the work region **202** at night, for example, using one or more camera exposure times. In some embodiments, the environmental lighting parameter may correspond to a measurement in the work region **202** during the day, for example, based on one or more camera exposure times during the day.

The mower **100** may be used to determine which positions and/or orientations within the work region **202** are localizable. Whether a particular position and/or orientation is localizable may depend on a feature detection score for the particular position and/or orientation. The feature detection score may be determined based on the quality of features, quantity of features, or both that can be extracted from images captured by the mower **100** at the particular position and/or orientation for a particular feature detection score. The particular position and/or orientation may be determined to be localizable if the feature detection score exceeds a minimum threshold. The minimum threshold may be determined based on, or may correspond to, a calculated probability that the mower **100** will be able to localize at the particular position and/or orientation, such as 50, 60, 70, 80, 90, 95, 99, or even 100 percent.

The feature detection score may be determined based on the quality of features, quantity or features, or both within the feature detection range. The particular position and/or orientation may be determined to be localizable in response to the number of features within the feature detection range exceeding a minimum features to localize (MFL) threshold. An MFL threshold may be any suitable number, such as one, two, three, four, or more features detectable by the mower **100.** In some embodiments, the MFL threshold may be in the single digits, tens, or even hundreds. In the illustrated embodiment, for example, the fourth position **210d** may be determined to be a localizable position at night if the MFL is three or less (as shown, three features **218** are within the second feature detection range **216,** which may correspond to nighttime).

A heat map based on the feature detection scores may be determined and stored relative to, or in, the navigation map **200.** The heat map based on feature detection scores may change over time and with environmental lighting parameter changes.

The navigation map **200** may include a region within the containment zone **204** that represents where the mower **100** may localize under certain conditions. For example, a localization region may be determined based on positions and/or orientations where the feature detection score exceeds the minimum threshold for a particular feature detection range. In the illustrated embodiment, the navigation map **200** includes a localization region **222.** The localization region **222** is determined based on the second detection range **216** associated with nighttime or low light. The localization region **222** may represent the area, outside of the exclusion zone **208,** where the mower **100** is able to localize when operating at night. In general, each position and/or orientation may have corresponding feature detection score. The feature detection scores may be uniform or non-uniform throughout the localization region **222.** For example, the feature detection score may be higher in a position and/or orientation of the mower **100** in which one or more cameras face the building in the exclusion zone **208** and capture a high number of features.

In some embodiments, the size and/or shape of the localization region **222** may change based on changes to the feature detection range **216.** The feature detection range **216** may change, for example, due to changes in the minimum threshold or changes in the environmental lighting parameter. In some embodiments, where the environmental lighting parameter is measured, the feature detection range **216** and/or the localization region **222** may change between operation or even during operation (night-to-night or as night progresses), for example, due to different lighting conditions due to moonlight, shadows, and other factors.

The navigation map **200** may include one or more buffer zones and related boundaries. Buffer zones may facilitate directing the mower **100** when vision-based localization may be more limited, such as at night or in low light. Using buffer zones may allow the mower **100** to operate outside in an area outside of the localization region **222** away from other boundaries. In some embodiments, a buffer zone may be adjacent to and inside the boundary of a containment zone. In the illustrated embodiment, the buffer zone **224** is adjacent to and inside of the boundary of the containment zone **204.** Although not illustrated, in some embodiments, a boundary of a buffer zone may be defined adjacent to and outside the boundary of an exclusion zone, such as exclusion zone **208.** In general, buffer zones along some or all of a zone boundary that is not proximate, adjacent to, or intersecting with the localization region **222.**

The mower **100** may be restricted to portions of the containment zone **204** that do not overlap with the exclusion zone **208** and the buffer zone **224,** for example, at night or in low light. In some embodiments, at night or in low light, the mower **100** may be allowed to operate only outside the boundary of the exclusion zone **208** and inside the boundary the buffer zone **224.** During the day when the mower can localize anywhere in the containment zone, the mower **100** may be allowed to operate only outside the boundary of the exclusion zone **208** and inside the boundary of the containment zone **204.**

A buffer distance may be determined and used to position the boundary of the buffer zone outside of the localization region **222.** In some embodiments, the boundary of the buffer zone may be spaced from the boundary of the localization region **222** by the buffer distance. In some embodiments, the boundary of the buffer zone may be spaced from the boundary of the containment zone **204** by the buffer distance. The buffer zone **224** may be defined between the buffer zone boundary and the boundary of the containment zone **204.** When using a travelling containment zone, such as the travelling containment zone **206,** the travelling containment zone may be defined initially to include, or grow to include, areas in the localization region **222** and areas outside of the localization region that do not overlap with the buffer zone **224.** In general, the uncertainty area **212** may extend beyond the travelling containment zone **206** but not beyond of the containment zone **204.**

The buffer distance may be determined based on a minimum, or nominal, distance between vision-based localizations. In some embodiments, a minimum distance between vision-based localizations may be determined based on predetermined factory setting for the performance of the particular autonomous machine and/or based on the particular work region. For example, the distance between vision-based localizations may be calculated based on wheel encoder data and/or IMU data, which may be described as dead reckoning. In some embodiments, the buffer distance may determined based on a fraction, or percentage, of the minimum distance between vision-based localizations. The buffer distance may be less than the minimum distance between vision-based localizations.

In some embodiments, the buffer distance may also be determined based on the environmental lighting parameter. For example, the buffer distance based on the minimum distance between vision-based localizations may be added to in response to an environmental lighting parameter indicating low light. In general, the buffer distance may be increased in response to an environmental lighting parameter indicating lower light available, for example, based on increased exposure times.

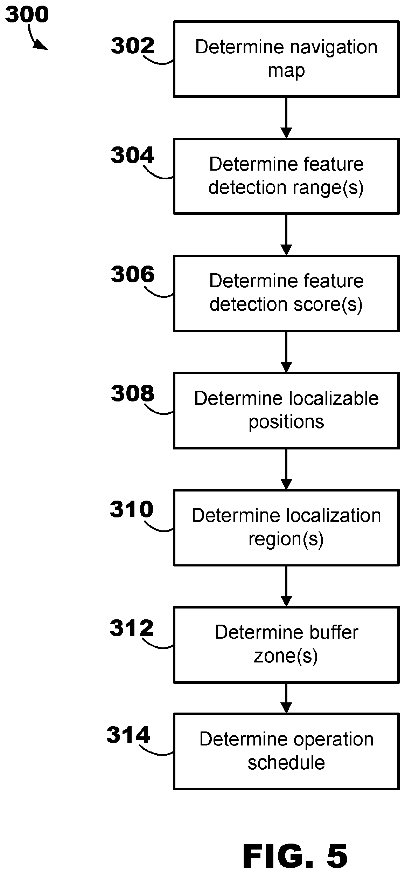

**FIG. 5** is a flow diagram showing one example of a method **300** of generating a navigation map including one or more localization regions and one or more buffer zones, for example, used during a training mode of the mower **100.** An initial navigation map may be determined **302.** The navigation map may be generated based on a 3DPC representing the work region. The navigation map may include one or more containment zone boundaries and optionally one or more exclusion zones defined relative to the 3DPC.

One or more feature detection ranges may be determined **304.** A feature detection range may be determined for daytime operation, and another feature detection range may be determined for nighttime operation.

Feature detection ranges may be based on an environmental lighting parameter. Environmental lighting parameters may be based on, for example, nighttime or daytime environmental lighting parameters. Nighttime environmental parameters may be based on a predetermined environmental lighting at night (e.g., worst case or nominal value) or a measured environmental lighting at night in the work region.

One or more feature detection scores for one or more positions and/or orientations may be determined **306.** Feature detection scores may be based on a particular feature detection range. In some embodiments, feature detection scores may be determined based on at least a feature detection range corresponding to nighttime operation. In general, a greater feature detection range may result in being able to detect more features in the navigation map.

Localizable positions and/or orientations in the navigation map may be determined **308.** Localizable positions and/or orientations may be based on the corresponding feature detection score for each position and/or orientation being above a minimum threshold.

One or more localization regions may be determined **310.** Localization regions may be determined based on the localizable positions and/or orientations. In some embodiments, the localization regions may include localizable positions and/or orientations having a feature detection score above the minimum threshold. The navigation map may be updated in response to determining the one or more localization regions.

One or more buffer zones may be determined **312.** At least one buffer zone may be adjacent to and inside of a boundary of the containment zone or adjacent to and outside of a boundary of an exclusion zone. In some embodiments, buffer zones may be determined based on the boundaries of the localization regions and a buffer distance, which may be described as an offset. In some embodiments, the buffer zones may be determined based on the boundary of a containment zone or exclusion zone and a buffer distance. The buffer distance may be determined based on a fraction of a minimum distance between localizations, an environmental lighting parameter, or both. The navigation map may be updated in response to determining the one or more buffer zones.

An operation schedule may be determined **314** to cover the work region using the navigation map. A schedule of operation may be determined for the mower automatically, based in user input, or a combination of both. Any suitable technique may be used to determine the operation schedule for the autonomous mower, such as those described in U.S. Provisional Application No. 62/822,342, filed March 22, 2019.

In some embodiments, the navigation map **200** may be displayed to a user, for example, using the user interface device **119** including a visual representation of the containment zone, any exclusion zones, any localization regions, and any buffer zones. Buffer zone may indicate where the mower cannot mow at night and must be mowed during the day. Areas outside of the localization zone within the containment zone may also indicate where the mower cannot mow at night and must be mowed during the day, for example, depending on the mode of the mower.

In some embodiments, a nighttime schedule for autonomous operation may be determined. The nighttime schedule may include coverage of the localization region and exclude the buffer zone. A daytime schedule for autonomous operation may be determined based on the nighttime schedule. The daytime schedule for autonomous operation may include at least the buffer zone. In general, the coverage of daytime and nighttime schedules may be determined to complement one another to cover the work region within a particular time period. In some embodiments, the coverage of daytime operation and nighttime operation may overlap some areas within the work region, which may help to account for uncertainty in the position and/or orientation of the mower.

In some embodiments, a user may be provided with a notice, for example, on the user interface device **119,** in response to determining that the daytime schedule and nighttime schedule for autonomous operation cannot cover the work region within the particular time period. For example, a user may limit the time allowed for mowing during the day such that the buffer zone cannot be covered. The user may be asked, for example, by the user interface device **119,** to increase the designated time period to cover the work region or to increase the amount of time available to operate during the daytime.

Localization regions and buffer zones may be used by the mower **100** in different operating modes. In one operating mode, which may be described as a restricted mode, night mode, or nighttime mode, the mower **100** may operate only within the localization region, for example, when the light level does not exceed the light threshold. In another operating mode, which may be described as a dynamic restricted mode, dynamic night mode, or dynamic nighttime mode, the mower **100** may operate within the containment zone including localization regions and outside of the localization regions excluding buffer zones. In another operating mode, which may be described as a dynamic mode, the mower **100** may operate within the containment zone without being restricted by localization regions excluding buffer zones, for example, when the light level exceeds a light threshold indicative of daylight conditions or when no localization region has been determined or is otherwise not available. The mower **100** may use any one or more of these operating modes, which may be factory set, user selected, or otherwise determined by the mower.

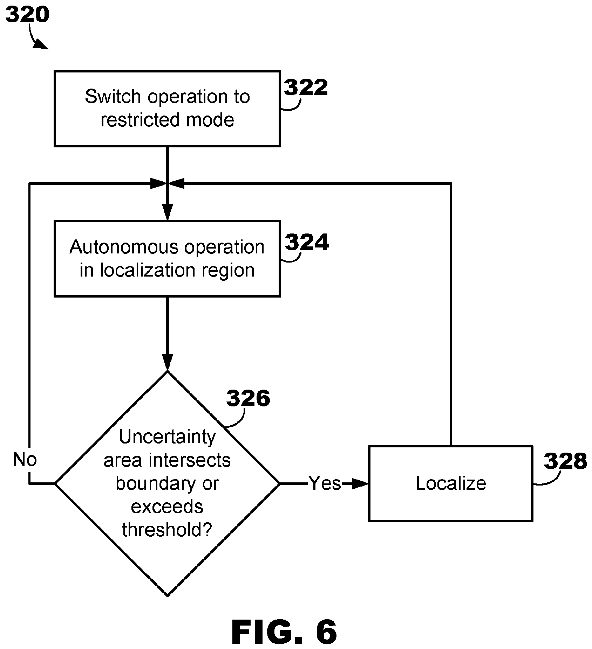

**FIG. 6** is a flow diagram showing one example of a method **320** of navigating within localization regions, which may be used in a restricted, night, or nighttime mode for low light conditions. The method **320** may include switching to the restricted mode of operation **322.** One or more localization zones, and related boundaries, may be defined within a containment zone in a navigation map, which may be predetermined during the training mode (see **FIG. 5**). One or more exclusion zones and related boundaries may also be defined within the containment zone in the navigation map. The localization region may be defined based on an environmental lighting parameter. In some embodiments, the environmental lighting parameter may be used to determine feature detection ranges and related feature detection scores for one or more positions and/or orientations in the work region. The feature detection scores may be compared to a minimum threshold to determine positions and/or orientation within the localization region.

In some embodiments, the localization region may be determined based on a predetermined environmental lighting parameter, such as a worst-case lighting parameter at night. In other embodiments, the localization region may be determined based on a measured environmental lighting parameter. The measured environmental lighting parameter may be determined in response to measuring environmental lighting at night in the work region. In some embodiments, the localization region may be updated in response to measuring environmental lighting.

In some embodiments, a traveling containment zone may be used to facilitate coverage of the containment zone. The traveling containment zone may overlap with the localization region and the containment zone outside of the localization region.

The machine may be directed to operate autonomously only in the localization region **324.** In some embodiments, a buffer zone may or may not be determined or used.

During operation, the machine may monitor whether an uncertainty area around the machine intersects a zone boundary of the navigation map or exceeds a minimum threshold **326.** The machine may initiate a localization **328,** for example, in response to determining that the uncertainty area intersects with a zone boundary or exceeds the minimum threshold. The machine may continue to operate autonomously in the localization region **324** after localization. The machine may also continue to operate autonomously in the localization region **324,** for example, in response to determining that the uncertainty area does not intersect with a zone boundary and does not exceed the minimum threshold.

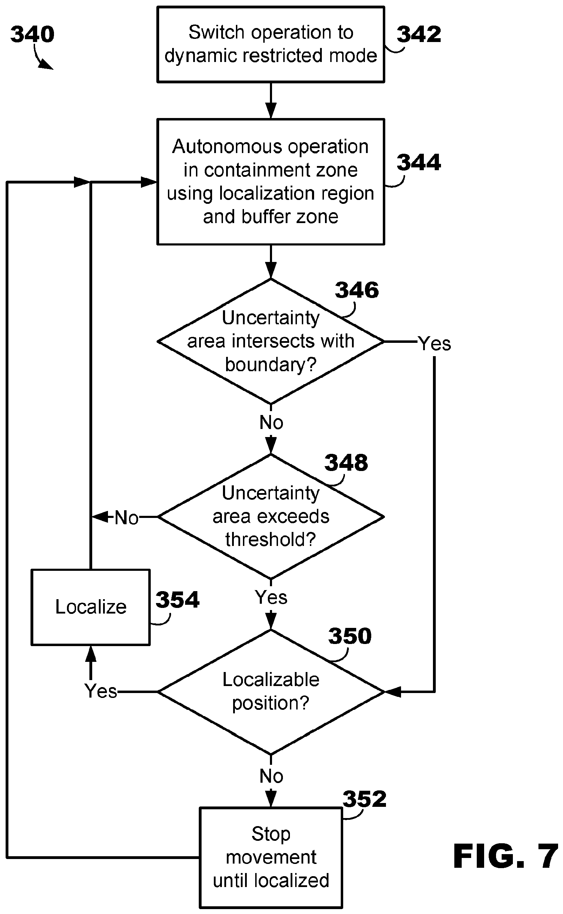

**FIG. 7** is a flow diagram showing one example of a method **340** of navigating within a containment zone using localization zones and buffer zones, which may be used in a dynamic restricted, dynamic night, or dynamic nighttime mode for low light conditions. The method **340** may include switching to the dynamic restricted mode of operation **342.** One or more localization zones and one or more buffer zones, and related boundaries, may be defined within a containment zone in a navigation map, which may be predetermined during the training mode (see **FIG. 5**). One or more exclusion zones and related boundaries may also be defined within the containment zone in the navigation map. The localization region may be defined based on an environmental lighting parameter. In some embodiments, the environmental lighting parameter may be used to determine feature detection ranges and related feature detection scores for one or more positions and/or orientations in the work region. The feature detection scores may be compared to a minimum threshold to determine positions and/or orientation within the localization region.

The machine may be directed to operate autonomously within the containment zone **344,** for example, within the localization region and outside of the localization region excluding the buffer zone. The machine may also be directed to avoid the one or more buffer zones during autonomous operation.

In some embodiments, the localization region may be determined based on a predetermined environmental lighting parameter, such as a worst-case lighting parameter at night. In other embodiments, the localization region may be determined based on a measured environmental lighting parameter. The measured environmental lighting parameter may be determined in response to measuring environmental lighting at night in the work region. In some embodiments, the localization region may be updated in response to measuring environmental lighting.

In some embodiments, a traveling containment zone may be used to facilitate coverage of the containment zone. The traveling containment zone may overlap with the localization region and the containment zone outside of the localization region excluding the buffer zone.

The machine may monitor whether an uncertainty area intersects with a boundary **346,** such as the boundary of the containment zone, a localization zone, or a buffer zone. The machine may determine whether the current position and/or orientation are localizable **350,** for example, in response to determining that the uncertainty area intersects with the boundary. The machine may monitor whether the uncertainty area exceeds a threshold **348,** for example, in response to determining that the uncertainty area does not intersect with the boundary. In other embodiments (not shown), the machine may continue to operate autonomously in the containment zone **344,** for example, in response to determining that the uncertainty area does not intersect with a boundary.

In some embodiments, the determination of whether the machine is in a localizable position and/or orientation **350** may be based on whether the mower is in the localization region. In some embodiments, to determine whether the machine is in a localizable position and/or orientation **350,** the machine may compare the current position and/or orientation to the localization region and determine whether the machine is within the localization region. The machine may perform a localization **354,** for example, in response to determining that the machine is in a localizable position and/or orientation.

The movement of the machine and/or any of its moving parts (e.g., cutting implement) may be stopped **352,** for example, in response to determining that the current position and/or orientation of the machine is not in a localizable position. The stoppage of moving parts such as cutting implements can help conserve power as well act as a safety measure. The machine or one or more of its moving parts may be stopped until the machine is able to localize at the current position. It will be understood that stopping the machine in this context is meant to convey that the machine does not necessarily continue ground traversal, e.g., forward or reverse motion with or without steering, but may still rotate in-place in order to attempt to re-acquire its position and/or orientation. The machine may take various actions while stopped, such as making movements that do not significantly change location but may help in re-acquisition of position and/or orientation, e.g., rocking back and forth. In another embodiment, depending on where the machine is, the machine may be able to travel a short distance away from containment boundaries in order to get to a location update.

In one example, the machine may repeatedly attempt vision-based localization until the machine is able to localize, which may involve rotation of the machine and/or a sensor of the machine about a vertical axis while acquiring vision-based data. In some embodiments, the mower may increase one or more of exposure time, gain, and aperture size, which may facilitate vision-based localization in low light conditions. The machine may additionally or alternatively activate a light source (e.g., visible, infrared) that illuminates a view of the vision-based senor in an attempt to obtain vision-based localization in low light conditions. In another embodiment, the machine may utilize a second vision-based sensor (e.g., alternate camera) instead of or in addition to the vision-based sensor used for the initial localization. The second vision-based sensor may be co-located with the first vision-based sensor but of a different type (e.g., infrared versus visible spectrum) The second vision-based sensor may be separately located from the first vision-based sensor and be of a same or different type. In another example, the machine may attempt non-vision-based localization using at least one non-vision-based sensor, such as a GPS. For example, a GPS receiver may obtain a more accurate geolocation accuracy when not moving for some amount of time (e.g., "soaking" the GPS), thus allowing the machine to localize enough to move again. In some embodiments, the machine may attempt non-vision-based localization in response to one or more unsuccessful attempts to use vision-based localization. Upon successful localization, the machine may continue to operate autonomously in the containment zone **344.** In one embodiment, after re-acquisition the machine may move towards areas of known good localization (e.g., an area with localization certainty below a threshold) to avoid further instances of localization loss.

In an alternate embodiment, instead of stopping ground traversal of the machine in response to determining that the current position and/or orientation of the machine is not in a localizable position, the machine may be configured to move to a second position to re-acquire localization. In one embodiment, the machine may backtrack, e.g., using signals from an inertial measurement unit or wheel encoder to retrace the path just traveled before localization was lost. This may still involve stopping of cutting implements and other moving parts as described above. The backtracking could occur incrementally, e.g., x-number of tries, each involving backing up y-feet. If this does not result in re-acquisition after the x-number of tries, then ground traversal could be stopped and re-acquisition at rest as described above may be attempted. In another embodiment, the machine may travel away from containment boundaries in an attempt to re-acquire localization.

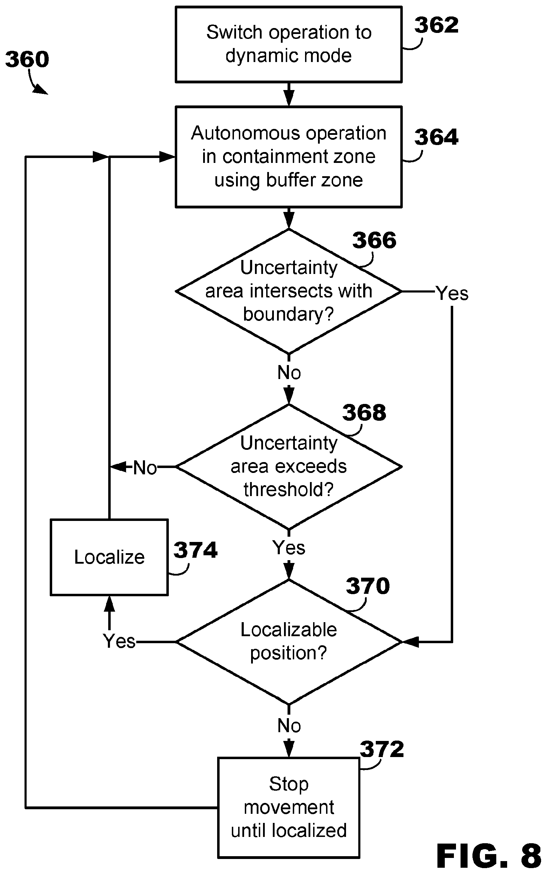

**FIG. 8** is a flow diagram showing one example of a method **360** of navigating within a containment zone using buffer zones, which may be used in a dynamic mode for low light conditions. Method **360** may be similar to method **340** except that method **360** may not determine a localization region. The method **360** may include switching to the dynamic mode of operation **362.** One or more buffer zones, and related boundaries, may be defined within a containment zones in a navigation map **362,** for example, during a training mode (see **FIG. 5**) based on the boundary of a containment zone or an exclusion zone and a buffer distance. One or more exclusion zones and related boundaries may also be defined within the containment zone in the navigation map.

The machine may be directed to operate autonomously within the containment zone **364,** for example, excluding the buffer zone. The machine may also be directed to avoid the one or more buffer zones during autonomous operation.

In some embodiments, a traveling containment zone may be used to facilitate coverage of the containment zone. The traveling containment zone may overlap with the containment zone excluding the buffer zone.

The machine may monitor whether an uncertainty area intersects with a boundary **366,** such as the boundary of the containment zone or a buffer zone. The machine may determine whether the current position and/or orientation are localizable **370,** for example, in response to determining that the uncertainty area intersects with the boundary. The machine may monitor whether the uncertainty area exceeds a threshold **368,** for example, in response to determining that the uncertainty area does not intersect with the boundary. In other embodiments (not shown), the machine may continue to operate autonomously in the containment zone **364,** for example, in response to determining that the uncertainty area does not intersect with a boundary.

In some embodiments, the determination of whether the machine is in a localizable position and/or orientation **370** may be based on whether the mower is in the localization region. In some embodiments, to determine whether the machine is in a localizable position and/or orientation **370,** the machine may attempt to perform vision-based localization. In some embodiments, an environmental lighting parameter may be used to determine whether the current position and/or orientation is localizable. The environmental lighting parameter may be used to determine a feature detection range and a related feature detection score in the current position and/or orientation. The feature detection score may be compared to a minimum threshold to determine whether the current position and/or orientation is localizable. The machine may perform a localization **374,** for example, in response to determining that the machine is in a localizable position and/or orientation.

The movement of the machine may be stopped **372,** for example, in response to determining that the current position and/or orientation of the machine is not in a localizable position. The machine may be stopped until the machine is able to localize at the current position. The machine may take various actions while stopped. In one example, the machine may repeatedly attempt vision-based localization until the machine is able to localize. In some embodiments, the mower may increase one or more of exposure time, gain, and aperture size, which may facilitate vision-based localization in low light conditions. In another example, the machine may attempt non-vision-based localization using at least one non-vision-based sensor, such as a GPS. In some embodiments, the machine may attempt non-vision-based localization in response to one or more unsuccessful attempts to use vision-based localization. Upon successful localization, the machine may continue to operate autonomously in the containment zone **364.**

In some embodiments, a method (not shown) similar to method 360 may be used for navigation during the day. For example, the buffer zone may or may not be determine or used when operating during the day.

### ILLUSTRATIVE EMBODIMENTS

While the present disclosure is not so limited, an appreciation of various aspects of the disclosure will be gained through a discussion of the specific examples and illustrative embodiments provided below. Various modifications of the illustrative embodiments, as well as additional embodiments of the disclosure, will become apparent herein.

Embodiment A1 is method of training an autonomous machine in a work region for navigation in various lighting conditions. The method comprises: determining data representing a navigation map of the work region, the navigation map including a containment zone; determining a feature detection range based on an environmental lighting parameter; determining a feature detection score for each of one or more positions in the containment zone based on the feature detection range; determining one or more localizable positions in the containment zone based on the corresponding feature detection scores; and updating the navigation map to include a localization region within the containment zone based on the one or more localizable positions and storing data representing the updated navigation map.

Embodiment A2 includes the method according to embodiment A1, further comprising determining the environmental lighting parameter based on a nighttime environmental lighting parameter. Embodiment A3 includes the method according to embodiment A2, wherein the nighttime environmental lighting parameter corresponds to a predetermined environmental lighting at night. Embodiment A4 includes the method according to embodiment A2, wherein the nighttime environmental parameter corresponds to a measured environmental lighting at night in the work region.

Embodiment A5 includes the method according to any of embodiments A2 to A4, further comprising determining another feature detection range based on a daytime environmental lighting parameter corresponding to a time of day between dawn and twilight. Embodiment A6 includes the method according to any one of the preceding A embodiments, wherein determining the one or more localizable positions comprises comparing the corresponding feature detection scores to a minimum threshold.

Embodiment A7 includes the method according to any one of the preceding A embodiments, further comprising determining one or more buffer zones, wherein at least one buffer zone is adjacent to and inside of a boundary of the containment zone or adjacent to and outside of a boundary of an exclusion zone. Embodiment A8 includes the method according to embodiment A7, wherein determining one or more buffer zones comprises determining a buffer distance based on a minimum distance between localizations, the environmental lighting parameter, or both.

Embodiment A9 includes the method according to embodiment A8, wherein determining a buffer distance based on a minimum distance between localizations comprises determining the buffer distance as a fraction of the minimum distance between localizations. Embodiment A10 includes the method according to any one of the preceding A embodiments, further comprising displaying on a user interface the updated navigation map and an indication of nighttime autonomous operation relative to the localization region.

Embodiment A11 includes the method according to any one of the preceding A embodiments, further comprising determining a daytime schedule for autonomous operation based on a nighttime schedule for autonomous operation relative to the localization region. Embodiment A12 includes the method according to embodiment A11, wherein the daytime schedule and the nighttime schedule for autonomous operation are determined to complement one another to cover the work region within a particular time period.

Embodiment A13 includes the method according to embodiment A12, further comprising providing a notice to a user on a user interface in response to determining that the daytime schedule and nighttime schedule for autonomous operation cannot cover the work region within the particular time period. Embodiment A14 includes the method according to any one of the preceding A embodiments, wherein determining data representing the navigation map comprises determining a three-dimensional point cloud (3DPC) representing the work region.

Embodiment B 1 is a method of navigation in various lighting conditions for an autonomous machine in a work region. The method comprises: determining a localization region in a navigation map of the work region, wherein the localization region is defined based on an environmental lighting parameter; determining an operating mode based on the environmental lighting parameter; and directing the machine to operate autonomously within the localization region based on the operating mode.

Embodiment B2 includes the method according to embodiment B 1, further comprising determining one or more buffer zones, wherein at least one buffer zone is adjacent to and inside of a containment zone or adjacent to and outside of an exclusion zone, wherein directing the machine to operate autonomously comprises directing the machine to avoid the one or more buffer zones during nighttime autonomous operation.

Embodiment B3 includes the method according to embodiment B 1 or B2, further comprising localizing the machine during autonomous operation using at least one vision-based sensor. Embodiment B3 includes the method according to any one of the preceding B embodiments, further comprising: determining whether the machine is able to localize at a current position; and in response to determining that the machine is unable to localize at the current position, stopping autonomous movement of the machine until the machine is able to localize at the current position.

Embodiment B4 includes the method according to embodiment B3, further comprising directing the machine to operate autonomously within a containment zone outside of the localization region. Embodiment B5 includes the method according to any one of embodiments B4 to B6, further comprising, in response to determining that the machine is unable to localize at the current position, localizing the machine using at least one non-vision-based sensor.

Embodiment B6 includes the method according to any one of the preceding B embodiments, further comprising: determining an uncertainty area around the machine; comparing the uncertainty area to an uncertainty area threshold; and localizing the machine in response to determining that the uncertainty area exceeds the uncertainty area threshold. Embodiment B7 includes the method according to embodiment B6, further comprising: determining whether the uncertainty area around the machine intersects with a boundary of a zone; stopping autonomous movement of the machine in response to determining that the uncertainty area around the machine intersects with a boundary of a zone; and localizing the machine in response to stopping autonomous movement of the machine.

Embodiment B8 includes the method according to any one of the preceding B embodiments, further comprising updating the localization region in response measuring environmental lighting at night in the work region. Embodiment B9 includes the method according to embodiment B8, wherein directing the machine to operate autonomously within the localization region comprises directing the machine to operate autonomously within a travelling containment zone within the updated localization region.

Embodiment C1 is a method of navigation in various lighting conditions for an autonomous machine in a work region. The method comprises: directing the machine to operate autonomously within a containment zone defined in a navigation map of the work region; determining whether vision-based localization is available at a position of the machine based on at least an environmental lighting parameter; and in response to determining that vision-based localization is not available at the position of the machine, stopping autonomous movement of the machine until the machine is able to localize at the current position.

Embodiment C2 includes the method according to example C1, further comprising determining one or more buffer zones, wherein at least one buffer zone is adjacent to and inside of the containment zone or adjacent to and outside of an exclusion zone, wherein directing the machine to operate autonomously comprises directing the machine to avoid the one or more buffer zones during nighttime autonomous operation.

Embodiment C3 includes the method according to example C1 or C2, further comprising: determining an uncertainty area around the machine; comparing the uncertainty area to an uncertainty area threshold; and localizing the machine in response to determining that the uncertainty area exceeds the uncertainty area threshold. Embodiment C4 includes the method according to example C3, further comprising: determining whether the uncertainty area around the machine intersects with a boundary of a zone; stopping autonomous movement of the machine in response to determining that the uncertainty area around the machine intersects with a boundary of a zone; and localizing the machine in response to stopping autonomous movement of the machine.

Embodiment D1 includes an autonomous machine comprising: a housing coupled to a maintenance implement; a propulsion system comprising a propulsion controller operably coupled to at least one motor; at least one camera adapted to record images in one or more environmental lighting conditions; and a controller operably coupled to the at least one camera and the propulsion controller, the controller adapted to perform a method according to any of the A, B, and C examples.

Embodiment E1 includes a method of navigation in various lighting conditions for an autonomous machine in a work region. The method comprises determining a localization region in a navigation map of the work region, wherein the localization region is defined based on an environmental lighting parameter; determining an operating mode based on the environmental lighting parameter, the operating mode defining whether the autonomous machine is allowed to operate outside of the localization region; and directing the autonomous machine to operate autonomously within the work region based on the operating mode.

Embodiment E2 includes the method according to embodiment E1, wherein the operating mode comprises a nighttime mode, the method further comprising determining one or more buffer zones, wherein at least one buffer zone is adjacent to and inside of a containment zone or adjacent to and outside of an exclusion zone, wherein directing the autonomous machine to operate autonomously comprises directing the autonomous machine to avoid the one or more buffer zones during the nighttime mode.

Embodiment E3 includes the method according to any of embodiments E1 or E2, further comprising: determining whether the autonomous machine is able to localize at a current position; and in response to determining that the autonomous machine is unable to localize at the current position, moving the machine to a second position to re-acquire localization. Embodiment E4 includes the method according to embodiment E3, wherein moving the machine to the second position comprises moving away from a boundary.

Embodiment E5 includes the method according to embodiment E3, wherein moving the machine to the second position comprises back tracking. Embodiment E6 includes the method according to any of embodiments E1 or E2, further comprising: determining whether the autonomous machine is able to localize at a current position; and in response to determining that the autonomous machine is unable to localize at the current position, stopping at least one of autonomous ground traversal of the autonomous machine and a moving part of the autonomous machine until the autonomous machine is able to localize at the current position using a vision-based sensor.

Embodiment E7 includes the method according to embodiment E6, further comprising, in response to localizing the current position, directing the autonomous machine to operate autonomously within a region having known good localization. Embodiment E8 includes the method according to embodiments E3 or E4, further comprising, in response to determining that the autonomous machine is unable to localize at the current position, using the vision-based sensor, localizing the autonomous machine using at least one non-vision-based sensor. Embodiment E9 includes the method according to embodiment E8, wherein the at least one non-vision-based sensor comprises a GPS sensor, and wherein the ground traversal of the autonomous machine stops for a period of time that allows the GPS sensor to obtain a more accurate geolocation reading.

Embodiment E10 includes the method according to embodiments E3 or E4, further comprising, in response to determining that the autonomous machine is unable to localize at the current position, activating a light source that illuminates a view of the vision-based sensor. Embodiment E11 includes the method according to embodiments E3 or E4, further comprising, in response to determining that the autonomous machine is unable to localize at the current position, localizing the current position using a second-vision based sensor.

Embodiment E12 includes the method according to embodiment E1, further comprising: determining an uncertainty area around the autonomous machine; comparing the uncertainty area to an uncertainty area threshold; and localizing the autonomous machine in response to determining that the uncertainty area exceeds the uncertainty area threshold. Embodiment E13 includes the method according to embodiment E12, further comprising: determining whether the uncertainty area around the autonomous machine intersects with a boundary of a zone; stopping autonomous movement of the autonomous machine or a moving part of the autonomous machine in response to determining that the uncertainty area around the autonomous machine intersects with a boundary of a zone; and localizing the autonomous machine in response to stopping autonomous movement of the autonomous machine.

Embodiment E14 includes the method according to embodiment E1, further comprising updating the localization region in response measuring environmental lighting at night in the work region. Embodiment E15 includes the method according to embodiment E14, wherein directing the autonomous machine to operate autonomously within the localization region comprises directing the autonomous machine to operate autonomously within a travelling containment zone within the updated localization region.

Embodiment E16 includes the method of embodiment E1, further comprising: determining a containment zone within the navigation map of the work region; determining a feature detection range based on the environmental lighting parameter; determining a feature detection score for each of one or more positions in the containment zone based on the feature detection range; determining one or more localizable positions in the containment zone based on the corresponding feature detection scores; and updating the navigation map to include the localization region within the containment zone based on the one or more localizable positions and storing data representing the updated navigation map.

Embodiment F1 is a an autonomous machine comprising: a housing coupled to a maintenance implement; a propulsion system comprising a propulsion controller operably coupled to at least one motor; at least one vision-based sensor operable to record images in an environmental lighting condition; and a controller operably coupled to the at least one vision-based sensor and the propulsion controller, the controller operable to perform the method of any of claims E1-E16.

Thus, various embodiments of autonomous machine navigation in various lighting environments are disclosed. Although reference is made herein to the accompanying set of drawings that form part of this disclosure, one of at least ordinary skill in the art will appreciate that various adaptations and modifications of the embodiments described herein are within, or do not depart from, the scope of this disclosure. For example, aspects of the embodiments described herein may be combined in a variety of ways with each other. Therefore, it is to be understood that, within the scope of the appended claims, the claimed invention may be practiced other than as explicitly described herein.

All scientific and technical terms used herein have meanings commonly used in the art unless otherwise specified. The definitions provided herein are to facilitate understanding of certain terms used frequently herein and are not meant to limit the scope of the present disclosure.

The recitation of numerical ranges by endpoints includes all numbers subsumed within that range (e.g. 1 to 5 includes 1, 1.5, 2, 2.75, 3, 3.80, 4, and 5) and any range within that range.

The terms "coupled" or "connected" refer to elements being attached to each other either directly (in direct contact with each other) or indirectly (having one or more elements between and attaching the two elements). Either term may be modified by "operatively" and "operably," which may be used interchangeably, to describe that the coupling or connection is configured to allow the components to interact to carry out functionality.

As used herein, the term "configured to" may be used interchangeably with the terms "adapted to" or "structured to" unless the content of this disclosure clearly dictates otherwise.

## Claims

1. A method of navigation in various lighting conditions for an autonomous machine (100) in a work region (202), the method comprising:
determining a localization region (222) (310) in a navigation map (200) of the work region (202), wherein the localization region (222) is determined based on a feature detection range (216) of the autonomous machine (100) that is determined based on an environmental lighting parameter indicative of a light level of a surrounding environment;
determining an operating mode (314) based on the environmental lighting parameter, the operating mode defining whether the autonomous machine (100) is allowed to operate outside of the localization region (222); and
directing the autonomous machine (100) to operate autonomously within the work region (202) based on the operating mode.

2. The method according to claim 1, wherein the operating mode comprises a low light mode, the method further comprising determining one or more buffer zones (312), wherein at least one buffer zone is adjacent to and inside of a containment zone (204, 206) or adjacent to and outside of an exclusion zone (208), wherein directing the autonomous machine (100) to operate autonomously comprises directing the autonomous machine (100) to avoid the one or more buffer zones during the low light mode.

3. The method according to any of claims 1 or 2, further comprising:
determining whether the autonomous machine (100) is able to localize at a current position; and
in response to determining that the autonomous machine (100) is unable to localize at the current position, moving the machine to a second position to re-acquire localization.

4. The method according to claim 3, wherein moving the machine (100) to the second position comprises at least one of moving away from a boundary and back tracking.

5. The method according to any of claims 1 or 2, further comprising:
determining whether the autonomous machine is able to localize at a current position (350); and
in response to determining that the autonomous machine is unable to localize at the current position, stopping at least one of autonomous ground traversal of the autonomous machine and a moving part of the autonomous machine (352) until the autonomous machine is able to localize at the current position using a vision-based sensor.

6. The method according to claim 5, further comprising, in response to localizing the current position, directing the autonomous machine (100) to operate autonomously within a region having known good localization.

7. The method according to claims 5 or 6, further comprising, in response to determining that the autonomous machine (100) is unable to localize at the current position using the vision-based sensor (133), localizing the autonomous machine using at least one non-vision-based sensor.

8. The method according to claim 7, wherein the at least one non-vision-based sensor comprises a GPS sensor, and wherein the ground traversal of the autonomous machine (100) stops for a period of time that allows the GPS sensor to obtain a more accurate geolocation reading.

9. The method according to claims 5 or 6, further comprising, in response to determining that the autonomous machine (100) is unable to localize at the current position, activating a light source that illuminates a view of the vision-based sensor.

10. The method according to claims 5 or 6, further comprising, in response to determining that the autonomous machine (100) is unable to localize at the current position, localizing the current position using a second-vision based sensor.

11. The method according to claim 1, further comprising:
determining an uncertainty area around the autonomous machine;
comparing the uncertainty area to an uncertainty area threshold (348); and
localizing the autonomous machine (100) (354) in response to determining that the uncertainty area exceeds the uncertainty area threshold;
determining whether the uncertainty area around the autonomous machine intersects with a boundary of a zone (346);
stopping autonomous movement of the autonomous machine (352) or a moving part of the autonomous machine in response to determining that the uncertainty area around the autonomous machine intersects with a boundary of a zone; and
localizing the autonomous machine (100) (354) in response to stopping autonomous movement of the autonomous machine.

12. The method according to claim 1, further comprising updating the localization region (222) in response measuring environmental lighting at night in the work region (202).

13. The method according to claim 12, wherein directing the autonomous machine (100) to operate autonomously within the localization region (222) comprises directing the autonomous machine (100) to operate autonomously within a travelling containment zone (204, 206) within the updated localization region (222).

14. The method of claim 1, further comprising:
determining a containment zone (204, 206) within the navigation map (200) of the work region (202);
determining the feature detection range (216) (304) based on the environmental lighting parameter;
determining a feature detection score (306) for each of one or more positions in the containment zone based on the feature detection range (216);
determining one or more localizable positions (308) in the containment zone (204, 206)_based on the corresponding feature detection scores; and
updating the navigation map to include the localization region (222) within the containment zone (204, 206) based on the one or more localizable positions and storing data representing the updated navigation map (200).

15. An autonomous machine (100) comprising:
a housing (102) coupled to a maintenance implement (110);
a propulsion system comprising a propulsion controller operably coupled to at least one motor (104);
at least one vision-based sensor (133) operable to record images in an environmental lighting condition; and
a controller (120) operably coupled to the at least one vision-based sensor (133) and the propulsion controller, the controller operable to perform the method of any previous claim.

## Patentansprüche

1. Verfahren zur Navigation bei verschiedenen Lichtverhältnissen für eine autonome Maschine (100) in einer Arbeitsregion (202), wobei das Verfahren umfasst:
Bestimmen einer Lokalisierungsregion (222) (310) in einer Navigationskarte (200) der Arbeitsregion (202), wobei die Lokalisierungsregion (222) basierend auf einem Merkmalserfassungsbereich (216) der autonomen Maschine (100) bestimmt wird, der basierend auf einem Umgebungsbeleuchtungsparameter bestimmt wird, der ein Lichtniveau einer Umgebung anzeigt;
Bestimmen eines Betriebsmodus (314) basierend auf dem Umgebungsbeleuchtungsparameter, wobei der Betriebsmodus definiert, ob die autonome Maschine (100) außerhalb der Lokalisierungsregion (222) arbeiten darf; und
Anweisen der autonomen Maschine (100), basierend auf dem Betriebsmodus innerhalb der Arbeitsregion (202) autonom zu arbeiten.

2. Verfahren nach Anspruch 1, wobei der Betriebsmodus einen Schwachlichtmodus umfasst, wobei das Verfahren ferner das Bestimmen einer oder mehrerer Pufferzonen (312) umfasst, wobei mindestens eine Pufferzone benachbart zu und innerhalb einer Einschlusszone (204, 206) oder benachbart zu und außerhalb einer Ausschlusszone (208) liegt, wobei das Anweisen der autonomen Maschine (100), autonom zu arbeiten, das Anweisen der autonomen Maschine (100) umfasst, die eine oder mehreren Pufferzonen während des Schwachlichtmodus zu vermeiden.

3. Verfahren nach einem der Ansprüche 1 oder 2, das ferner umfasst:
Bestimmen, ob die autonome Maschine (100) in der Lage ist, an einer aktuellen Position zu lokalisieren; und
als Reaktion auf das Bestimmen, dass die autonome Maschine (100) nicht in der Lage ist, an der aktuellen Position zu lokalisieren, das Bewegen der Maschine zu einer zweiten Position, um die Lokalisierung wieder zu erlangen.

4. Verfahren nach Anspruch 3, wobei das Bewegen der Maschine (100) zu der zweiten Position mindestens eines der Folgenden umfasst: Wegbewegen von einer Begrenzung und Rückverfolgung.

5. Verfahren nach einem der Ansprüche 1 oder 2, das ferner umfasst:
Bestimmen, ob die autonome Maschine in der Lage ist, an einer aktuellen Position (350) zu lokalisieren; und
als Reaktion auf das Bestimmen, dass die autonome Maschine nicht in der Lage ist, an der aktuellen Position zu lokalisieren, Anhalten mindestens einer der autonomen Bodenüberquerungen der autonomen Maschine und eines sich bewegenden Teils der autonomen Maschine (352), bis die autonome Maschine in der Lage ist, an der aktuellen Position unter Verwendung eines auf Sicht basierenden Sensors zu lokalisieren.

6. Verfahren nach Anspruch 5, das ferner umfasst, dass als Reaktion auf die Lokalisierung der aktuellen Position die autonome Maschine (100) angewiesen wird, in einem Bereich mit bekannter guter Lokalisierung autonom zu arbeiten.

7. Verfahren nach Anspruch 5 oder 6, das ferner umfasst, als Reaktion auf die Bestimmung, dass die autonome Maschine (100) nicht in der Lage ist, an der aktuellen Position unter Verwendung des auf Sicht basierenden Sensors (133) zu lokalisieren, die autonome Maschine unter Verwendung mindestens eines nicht auf Sicht basierenden Sensors zu lokalisieren.

8. Verfahren nach Anspruch 7, wobei der mindestens eine nicht auf Sicht basierende Sensor einen GPS-Sensor umfasst und wobei die Bodenüberquerung der autonomen Maschine (100) für eine Zeitspanne angehalten wird, die es dem GPS-Sensor ermöglicht, einen genaueren Geolokalisierungswert zu erhalten.

9. Verfahren nach Anspruch 5 oder 6, das ferner umfasst, als Reaktion auf das Bestimmen, dass die autonome Maschine (100) nicht in der Lage ist, an der aktuellen Position zu lokalisieren, eine Lichtquelle zu aktivieren, die eine Ansicht des auf Sicht basierenden Sensors beleuchtet.

10. Verfahren nach Anspruch 5 oder 6, das ferner umfasst, als Reaktion auf die Bestimmung, dass die autonome Maschine (100) nicht in der Lage ist, die aktuelle Position zu lokalisieren, die Lokalisierung der aktuellen Position unter Verwendung eines auf zweiter Sicht basierenden Sensors.

11. Verfahren nach Anspruch 1, das ferner umfasst:
Bestimmen einer Unsicherheitsregion um die autonome Maschine;
Vergleichen der Unsicherheitsregion mit einem Schwellenwert für die Unsicherheitsregion (348); und
Lokalisieren der autonomen Maschine (100) (354) als Reaktion auf das Bestimmen, dass die Unsicherheitsregion den Schwellenwert für die Unsicherheitsregion überschreitet;
Bestimmen, ob die Unsicherheitsfläche um die autonome Maschine herum sich mit einer Grenze einer Zone (346) schneidet;
Anhalten der autonomen Bewegung der autonomen Maschine (352) oder eines beweglichen Teils der autonomen Maschine als Reaktion auf das Bestimmen, dass die Unsicherheitsfläche um die autonome Maschine eine Grenze einer Zone schneidet; und
Lokalisieren der autonomen Maschine (100) (354) als Reaktion auf das Anhalten der autonomen Bewegung der autonomen Maschine.

12. Verfahren nach Anspruch 1, das ferner das Aktualisieren der Lokalisierungsregion (222) als Reaktion auf die Messung der Umgebungsbeleuchtung bei Nacht in der Arbeitsregion (202) umfasst.

13. Verfahren nach Anspruch 12, wobei das Anweisen der autonomen Maschine (100) zum autonomen Betrieb innerhalb der Lokalisierungsregion (222) das Anweisen der autonomen Maschine (100) zum autonomen Betrieb innerhalb einer sich bewegenden Einschlusszone (204, 206) innerhalb der aktualisierten Lokalisierungsregion (222) umfasst.

14. Verfahren nach Anspruch 1, das ferner umfasst:
Bestimmen einer Einschlusszone (204, 206) innerhalb der Navigationskarte (200) der Arbeitsregion (202);
Bestimmen des Merkmalserfassungsbereichs (216) (304) basierend auf dem Umgebungsbeleuchtungsparameter,
Bestimmen einer Merkmalserfassungsbewertung (306) für jede von einer oder mehreren Positionen in der Einschlusszone, basierend auf dem Merkmalserfassungsbereich (216);
Bestimmen einer oder mehrerer lokalisierbarer Positionen (308) in der Einschlusszone (204, 206) basierend auf den entsprechenden Merkmalserfassungsergebnissen; und
Aktualisieren der Navigationskarte, um die Lokalisierungsregion (222) innerhalb der Einschlusszone (204, 206) basierend auf der einen oder den mehreren lokalisierbaren Positionen zu enthalten, und Speichern von Daten, die die aktualisierte Navigationskarte (200) darstellen.

15. Autonome Maschine (100) umfassend:
ein Gehäuse (102), das mit einer Wartungsvorrichtung (110) gekoppelt ist;
ein Antriebssystem, das einen Controller für den Antrieb umfasst, der betriebsbereit mit mindestens einem Motor (104) gekoppelt ist
mindestens einen auf Sicht basierenden Sensor (133), der zur Aufzeichnung von Bildern bei einer Umgebungsbeleuchtung betreibbar ist; und
einen Controller (120), der betriebsfähig mit dem mindestens einen auf Sicht basierenden Sensor (133) und dem Antriebscontroller gekoppelt ist, wobei der Controller betriebsfähig ist, um das Verfahren nach einem der vorhergehenden Ansprüche durchzuführen.

## Revendications

1. Procédé de navigation dans diverses conditions d'éclairage pour une machine autonome (100) dans une région de travail (202), le procédé comprenant :
la détermination d'une région de localisation (222) (310) dans une carte de navigation (200) de la région de travail (202), dans lequel la région de localisation (222) est déterminée sur la base d'une portée de détection de caractéristiques (216) de la machine autonome (100) qui est déterminée sur la base d'un paramètre d'éclairage environnemental indicatif d'un niveau de lumière d'un environnement immédiat ;
la détermination d'un mode de fonctionnement (314) sur la base du paramètre d'éclairage environnemental, le mode de fonctionnement définissant si la machine autonome (100) est autorisée à fonctionner en dehors de la région de localisation (222) ; et
la commande de la machine autonome (100) pour qu'elle fonctionne de manière autonome dans la région de travail (202) sur la base du mode de fonctionnement.

2. Procédé selon la revendication 1, dans lequel le mode de fonctionnement comprend un mode de lumière faible, le procédé comprenant en outre la détermination d'une ou de plusieurs zones tampons (312), dans lequel au moins une zone tampon est adjacente à une zone de confinement (204, 206) et à l'intérieur de celle-ci ou adjacente à une zone d'exclusion (208) et à l'extérieur de celle-ci, dans lequel la commande de la machine autonome (100) pour qu'elle fonctionne de manière autonome comprend la commande de la machine autonome (100) pour qu'elle évite les une ou plusieurs zones tampons durant le mode de lumière faible.

3. Procédé selon l'une quelconque des revendications 1 ou 2, comprenant en outre :
la détermination du fait que la machine autonome (100) est capable ou non de se localiser à une position actuelle ; et
en réponse à la détermination du fait que la machine autonome (100) est incapable de se localiser à la position actuelle, le déplacement de la machine jusqu'à une deuxième position pour acquérir à nouveau une localisation.

4. Procédé selon la revendication 3, dans lequel le déplacement de la machine (100) jusqu'à la deuxième position comprend au moins l'un parmi un déplacement en éloignement d'une limite et une marche arrière.

5. Procédé selon l'une quelconque des revendications 1 ou 2, comprenant en outre :
la détermination du fait que la machine autonome est capable ou non de se localiser à une position actuelle (350) ; et
en réponse à la détermination du fait que la machine autonome est incapable de se localiser à la position actuelle, l'arrêt d'au moins l'une parmi une traversée autonome au sol de la machine autonome et une partie mobile de la machine autonome (352) jusqu'à ce que la machine autonome soit capable de se localiser à la position actuelle à l'aide d'un capteur basé sur la vision.

6. Procédé selon la revendication 5, comprenant en outre, en réponse à la localisation de la position actuelle, la commande de la machine autonome (100) pour fonctionner de manière autonome dans une région ayant une bonne localisation connue.

7. Procédé selon les revendications 5 ou 6, comprenant en outre, en réponse à la détermination du fait que la machine autonome (100) est incapable de se localiser à la position actuelle à l'aide du capteur basé sur la vision (133), la localisation de la machine autonome à l'aide d'au moins un capteur non basé sur la vision.

8. Procédé selon la revendication 7, dans lequel au moins un capteur non basé sur la vision comprend un capteur GPS, et dans lequel la traversée au sol de la machine autonome (100) s'arrête pendant une période de temps qui permet au capteur GPS d'obtenir une lecture de géolocalisation plus précise.

9. Procédé selon les revendications 5 ou 6, comprenant en outre, en réponse à la détermination du fait que la machine autonome (100) est incapable de se localiser à la position actuelle, l'activation d'une source de lumière qui illumine une vue du capteur basé sur la vision.

10. Procédé selon les revendications 5 ou 6, comprenant en outre, en réponse à la détermination du fait que la machine autonome (100) est incapable de se localiser à la position actuelle, la localisation de la position actuelle à l'aide d'un deuxième capteur basé sur la vision.

11. Procédé selon la revendication 1, comprenant en outre :
la détermination d'une aire d'incertitude autour de la machine autonome ;
la comparaison de l'aire d'incertitude à un seuil d'aire d'incertitude (348) ;
la localisation de la machine autonome (100) (354) en réponse à la détermination du fait que l'aire d'incertitude dépasse le seuil d'aire d'incertitude ;
la détermination du fait que l'aire d'incertitude autour de la machine autonome croise une limite d'une zone (346) ;
l'arrêt du déplacement autonome de la machine autonome (352) ou d'une partie mobile de la machine autonome en réponse à la détermination du fait que l'aire d'incertitude autour de la machine autonome croise une limite d'une zone ; et
la localisation de la machine autonome (100) (354) en réponse à l'arrêt du déplacement autonome de la machine autonome.

12. Procédé selon la revendication 1, comprenant en outre la mise à jour de la région de localisation (222) en réponse à la mesure de l'éclairage environnemental pendant la nuit dans la région de travail (202).

13. Procédé selon la revendication 12, dans lequel la commande de la machine autonome (100) pour qu'elle fonctionne de manière autonome dans la région de localisation (222) comprend la commande de la machine autonome (100) pour qu'elle fonctionne de manière autonome dans une zone de confinement (204, 206) de déplacement dans la région de localisation (222) mise à jour.

14. Procédé selon la revendication 1, comprenant en outre :
la détermination d'une zone de confinement (204, 206) dans la carte de navigation (200) de la région de travail (202) ;
la détermination de la portée de détection des caractéristiques (216) (304) sur la base du paramètre d'éclairage environnemental ;
la détermination d'un score de détection de caractéristiques (306) pour chacune d'une ou de plusieurs positions dans la zone de confinement sur la base de la portée de détection de caractéristiques (216) ;
la détermination d'une ou de plusieurs positions localisables (308) dans la zone de confinement (204, 206) sur la base des scores de détection de caractéristiques correspondants ; et
la mise à jour de la carte de navigation pour inclure la région de localisation (222) dans la zone de confinement (204, 206) sur la base des une ou plusieurs positions localisables et le stockage de données représentant la carte de navigation (200) mise à jour.

15. Machine autonome (100) comprenant :
un boîtier (102) couplé à un accessoire d'entretien (110) ;
un système de propulsion comprenant un dispositif de commande de propulsion couplé fonctionnellement à au moins un moteur (104) ;
au moins un capteur basé sur la vision (133) capable de fonctionner pour enregistrer des images dans une condition d'éclairage environnemental ; et
un dispositif de commande (120) couplé fonctionnellement à l'au moins un capteur basé sur la vision (133) et au dispositif de commande de propulsion, le dispositif de commande étant capable de fonctionner pour réaliser le procédé de l'une quelconque des revendications précédentes.
